# EUROPEAN PATENT SPECIFICATION

(11) **EP 0 404 398 B1**
(45) Date of publication and mention of the grant of the patent: **03.05.1995**
(21) Application number: 90306212.3
(22) Date of filing: 07.06.1990
(51) Int. Cl.: G09G 5/02, G09G 1/28, H04N 1/46

(54) **Data processing system**
Datenverarbeitungssystem
Système de traitement de données

(30) Priority: 19.06.1989 US 368439
(43) Date of publication of application: 27.12.1990
(73) Proprietor: International Business Machines Corporation, Armonk, N.Y. 10504 (US)
(72) Inventor: Deacon, John Joseph, Austin, Texas 78727 (US); Edgar, Albert Durr, Austin, Texas 78727 (US)
(74) Representative: Burt, Roger James, Dr.

(56) References cited:
- EP-A- 0 264 754
- US-A- 4 084 183
- COMPUTER GRAPHICS vol. 16, no. 3, July 1982, NEW YORK pages 297 - 307; P.HECKBERT: 'Color Image Quantization for Frame Buffer Display '

## Description

The present invention relates to a data processing system wherein a multi-dimensional space is represented by a plurality of sample points within the multi-dimensional space, and, more particularly, to data processing systems for displaying colour images where it provides a more efficient utilisation of colour sample points for a colour palette.

Colour image display systems are well known in the prior art. Such systems generally utilise a display device, such as a colour monitor, for generating an image comprised of rows and columns of picture elements, each picture element having a selected colour associated therewith. The selected colour associated with each picture element is generally selected from a set of colours which is stored in a so-called colour palette. A colour palette is a set of colours from a three-dimensional colour space which is generally uniformly representative of that colour space.

One manner in which a plurality of colours may be stored within a colour palette is well known in the art. Each selected colour from the three-dimensional universe of colours is represented by a sample point within the colour palette. These sample points are distributed, in prior art colour image display systems in uniform steps within a cubic Cartesian grid. Error diffusion may then be utilised to create any colour which is between two such sample points by mixing.

Thus, it is apparent that the more sample points which are located within a colour palette the more accurate will be the colour images which may be produced by the colour image display system associated with that colour palette. This is true due to the fact that when more colour sample points are included within the colour palette the maximum distance between any desired colour in an image picked form the universe of all possible colours to the nearest sample point in the palette is lessened.

Thus in the prior art the only way of improving the accuracy of the colour images has been to increase the number of sample points in order to reduce the worst-case distance between any arbitrary point within the image and the nearest sample point in the colour palette.

Thus, data processing systems are known for generating for display a plurality of picture elements which form a digital representation of an input image, the system comprising: a colour palette in which are stored a fixed number of colour sample points distributed in a multidimensional colour space; and means to select a colour sample point from the colours in said colour palette for each picture element. See, for example, Computer Graphics, Vol 16 no 3. July 1982, New York pages 297-307.

This invention provides a data processing system of this type characterised in that the colour sample points are disposed in the colour space in a hexagonal crystalline arrangement.

In a preferred form of the invention the multi-dimensional space has multiple axes and boundaries defining a volume and the data processing system comprises means for distributing the sample points within the volume for a predetermined worst-case distance between any arbitrary point within the multi-dimensional space and the closest sample point, the means for distributing comprising means for selected an axis in the multi-dimensional space, means for defining a surface which is normal to the selected axis, means for calculating coordinate data for sample points on the surface subject to the constraints that each sample point lies within the boundaries and that no 2 sample points lie closer together than a minimum distance, the minimum distance being functionally dependant on the predetermined worst-case distance, means for determining when no further points satisfying the constraints may be found on the surface, means for altering the position of the defined surface incrementally.

In a preferred form of the invention, the data processing system is a display adapter for a display system comprising a display device for displaying rows and columns of picture elements each having a selected colour associated therewith. The multi-dimensional colour space can be a three-dimensional colour space with the three-dimensions corresponding to the primary colours.

The data processing system can further comprise a display device for displaying rows and columns of picture elements each having a selected colour associated therewith, a display driver for coupling selected colour points to the display device, and a processor means for selecting a colour point within the colour palette for each of the picture elements.

According to another aspect of the invention there is provided a method for operating a data processing system comprising the step of generating and storing in a colour palette, a representation of a multi-dimensional colour space, the representation comprising a plurality of colour sample points disposed within the multi-dimensional colour space characterised in that the sample points are disposed in the colour space in a hexagonal crystalline arrangement.

In a preferred form of this aspect of the invention the step of representing the sampled multi-dimensional space at a plurality of sample points comprises the steps of: selecting a number of sample points; and distributing the selected number of sample points in a hexagonal crystalline structure throughout the multi-dimensional space. In the case that the multi-dimensional space has multiple axes and boundaries, which may be irregular, the step of distributing the selected number of sample points in a hexagonal crystalline structure throughout the multi-dimensional space advantageously comprises the steps of: selecting a minimum distance between any sample point within the multi-dimensional space and the closest sample point; selecting an axis; defining a surface normal to the selected axis; distributing sample points on the defined surface subject to the constraints that each sample point lies on or within the boundaries and that no two sample points lie closer together than the minimum distance; and altering the position of the defined surface incrementally and repeating the distributing step until the selected number of sample points are distributed throughout the multi-dimensional space.

The step of distributing the predetermined number of sample points in a hexagonal crystalline structure throughout the multi-dimensional space can comprise the step of distributing a selected number of sample points at the boundaries of the multi-dimensional space. In the case where the sample points are colour sample points in a multi-dimensional colour space, this enables brilliant colours, located at the boundaries of the colour space, to be sampled.

The step of selecting a minimum distance between any point within the multi-dimensional space and the closest sample point can comprise the step of selecting a variable distance between any point within the multi-dimensional space and the closest sample point according to the position of the point within the multi-dimensional space and the direction of the closest sample point. In the case where the sample points are colour sample points in a multi-dimensional colour space, this enables the non-linear perception of colours by the human eye to be taken into account in the distribution of colours in a colour palette.

The invention will be described in further detail below, with reference to the following figures, wherein:
Figure 1 is a block diagram representation of a data processing system provided in accordance with the present invention;
Figure 2 is a schematic illustration of the effect of uniformity of colour sample point distribution in a colour palette;
Figure 3 is a schematic representation of a three-dimensional colour palette;
Figure 4A and 4B are schematic representations of colour sample point distributions within a two-dimensional colour palette in the manner of the prior art and the present invention, respectively;
Figure 5 is a schematic representation of a three-dimensional distribution of colour sample points in accordance with the present invention;
Figure 6A and 6B depict two methods of boundary treatment within a colour palette in accordance with the present invention; and
Figure 7 depicts a schematic representation of a method for distributing colour sample points within a colour palette with irregular boundaries.

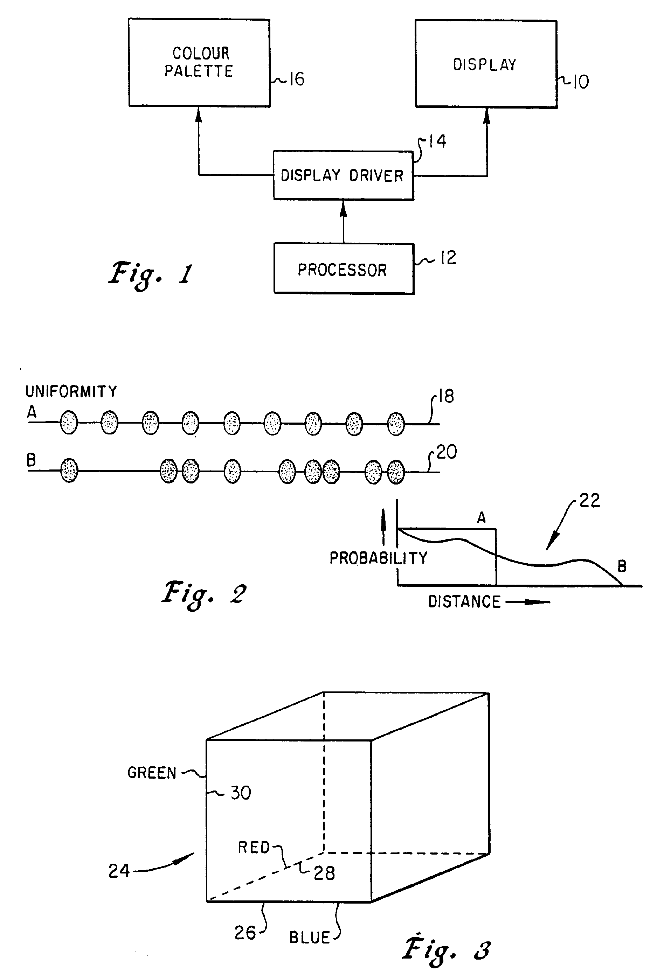

With reference now to the figures and in particular with reference to Figure 1, there is depicted a block diagram representation of a data processing system provided in accordance with the present invention. lt comprises a display system including a display device 10 which may be a colour monitor or other display device well known in the art. Display device 10 preferably is utilised to generate a colour image by providing rows and columns of picture elements, each picture element having a particular colour associated therewith. Processor 12 is utilised to control the presentation of a colour image via display device 10. Processor 12 may be implemented utilising any standard digital processor system capable of generating an image. For example, processor 12 may be provided by utilising a personal computer such as the Model PS/2 personal computer manufactured by International Business Machines Corporation of Armonk, New York.

Coupled between display 10 and processor 12 is display driver 14. Display driver 14 is can be a graphics adapter card or other suitable device capable of interfacing between processor 12 and display 10 in a manner which is well known in the art. Coupled to display driver 14 is colour palette 16. Colour palette 16 is preferably a three-dimensional colour palette in colour image display systems. Colour palette 16 is preferably resident within a memory device associated with display driver 14 and serves to store the universe of colour sample points which may be selected by display driver 14 for utilisation within the rows and columns of picture elements within display device 10.

Referring now to Figure 2, there is depicted a schematic illustration of the effect of uniformity of colour sample point distribution in a display system for generating colour images. Figure 2 depicts a one-dimensional colour palette which may be utilised to illustrate that uniformity is a key measure of the efficiency of a colour palette. As is depicted, colour palette A, indicated at reference numeral 18 and colour palette B, indicated at reference numeral 20, both possess the same number of colour sample points. However, for an arbitrary point within the palette the distance to a palette sample colour point is much more random for colour palette B due to the non-uniform distribution of colour sample points within colour palette B. Graph 22 represents a plot of the probability that a random colour is within a selected distance to a preexisting colour sample point within each palette. As may be seen, colour palette A contains a much higher probability that an arbitrary point which is specified will be within a smaller distance to an existing colour sample point.

Those skilled in the art will appreciate that the worst-case distance between an arbitrary point and the nearest colour sample point within a palette has a direct effect upon the efficiency of a colour palette. The greater the worst-case distance between an arbitrary point within the colour palette and a colour sample point the greater the "root mean square average" of the distance for the colour palette. Or, stated another way, a palette having a greater possible maximum distance between an arbitrary point and the nearest colour sample point is said to have greater "noise power." It should be apparent that palette B is much less efficient for the same number of colour sample points than colour palette A.

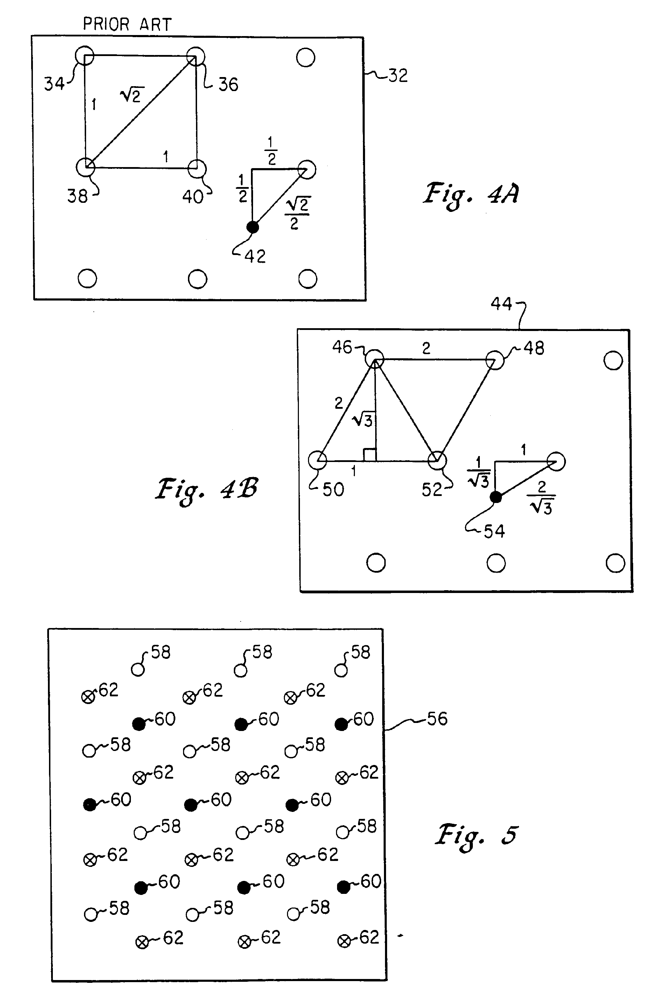

With reference now to Figure 3, there is depicted a schematic representation of a three-dimensional colour palette. As may be seen, the idealised colour palette indicated at reference numeral 24 is a three-dimensional cubic palette which includes a primary colour associated with each major axes therein. That is, the blue colour is associated with axis 26, the red colour associated with axis 28 and the green colour associated with axis 30. By aligning a primary colour with each major axis within the cubic three-dimensional colour palette the sample points which will be distributed within colour palette 24 may be utilised to represent any colour within the universe represented by the boundaries of colour palette 24.

Referring now to Figures 4A and 4B, there are depicted schematic representations of colour sample point distribution schemes within a pair of two-dimensional colour palettes which correspond to the known prior art method of colour point distribution and the method of distribution disclosed in the present invention.

Figure 4A represents a Cartesian grid in two dimensions which is illustrative of the cubic Cartesian grid utilised in three-dimensional colour palettes by known computer colour display systems. As may be seen, the portion 32 of a prior art colour palette represented in Figure 4A includes a plurality of colour sample points such as colour sample points 34, 36, 38 and 40, which are laid out in a Cartesian grid system. By assigning an arbitrary unit of separation between adjacent colour sample points of one, and by utilising simple geometry, it may be seen that the worst-case distance between an arbitrary point within colour palette 32 and the nearest colour sample point will occur when the arbitrary point lies equidistant between colour sample points 34, 36, 38 and 40. This distance may be calculated utilising the arbitrary dimensions selected and is equal to one-half the square root of two, or approximately 0.707.

Referring now to Fiqure 4B, there is depicted a partial representation of a colour palette 44 which includes a plurality of colour sample points which are distributed in the manner of the present invention. As may be seen, the colour sample points within colour palette 44 are laid out in a hexagonal grid. That is, the colour sample points form a hexagon with an additional point located at the centre thereof. Examining the group of four colour sample points indicated at reference numerals 46, 48, 50 and 52, simple geometry may be utilised again to determine the worst case distance between an arbitrary point and the nearest colour sample point in the hexagonal grid.

By assigning an arbitrary unit of separation between adjacent points in the hexagonal grid of two units, it may be seen that the worst-case distance occurs when an arbitrary point 54 is located at the central point which is equidistant between triangularly spaced colour sample points. This distance may be calculated for the arbitrary dimensions selected and is equal to two over the square root of three or approximately 1.15.

Next, in order to fully appreciate the difference between the maximum worst-case separation distance between an arbitrary point in each of the foregoing colour palettes and the nearest colour sample point, it is necessary to scale the dimensions which were utilised so as to achieve equal coverage of area within each colour palette with the same number of colour sample points.

Referring again to Figure 4A, it may be seen that the area between the four colour sample points denoted at reference numerals 34, 36, 38 and 40 is equal to one square unit. Similarly, in Figure 4B, the area between the colour sample points denoted at reference numerals 46, 48, 50 and 52 is equal to the base of the formed parallelogram times the height of the parallelogram. This is equal to two times the square root of three.

Thus, the worst-case separation distance calculated with regard to Figure 4B must be multiplied by the factor one over the square root of the quantity two times the square root of three. As a result of this scaling, the maximum worst-case distance calculated with respect to Figure 4B will be equal to approximately 0.53 times the 1.15 maximum worst-case distance previously obtained. Thus, when scaling has been properly applied, the maximum worst-case distance for an equal number of colour sample points within the colour palette of 4B is approximately 0.610, as opposed to 0.707 in the case of Figure 4A. Thus, when each palette is constructed with a density of one colour sample point per square unit the worst-case distance between an arbitrary point and the nearest colour sample point in the Cartesian grid colour palette is 14% greater than the worst-case distance between an arbitrary point and the nearest colour sample point in the hexagonal grid palette.

Of course, the geometry is much more complex in a three-dimensional space; however, the additional dimension gives even greater benefit from the optimal packing which is obtainable utilising a hexagonal grid. Calculations have indicated that the worst-case distance in a cubic Cartesian grid is approximately is approximately 26% greater than that which is obtainable utilising a hexagonal crystalline grid in accordance with the method of the present invention.

Those skilled in the mathematical arts will appreciate that in three dimensions the worst-case distance will vary as the cube root of the number of colours. For example, in a colour palette which includes a colour sample point located at every inch in a one foot cube, there will be 12*12*12 total colours. To allow the colour sample points to be twice as close, or spaced every half inch, there will now be 24*24*24 total colours. This decrease in colour spacing results in eight times as many colours. Thus, to make a cubic Cartesian grid colour palette equal to hexagonal crystalline structure packing would require 26% more colours along each dimension for a total of (1.26) ³ or two times as many colours. Thus, a two hundred colour hexagonal crystalline colour palette has the same worst-case distance as a four hundred colour colour palette where the sample points are laid out on a cubic Cartesian grid.

Still another method of measuring the quality of a colour palette is the number of directions in which the processor may travel from one colour to another colour. In a Cartesian cubic grid there are six closest colours for any given colour. The next six closest colours are 1.414 farther away than the nearest six colours due to the cubic geometry involved. In a three-dimensional hexagonal crystalline grid there are twelve closest colours, twice as many direction choices as will be available in a cubic Cartesian grid.

With reference now to Figure 5, there is depicted a schematic representation of a three-dimensional distribution of colour sample points in accordance with the method of the present invention. As may be seen, the portion of colour palette 56 which is illustrated includes three separate representations of colour sample points. First, a group of hexagonally distributed colour sample points 58 is laid out in a manner substantially identical to the distribution of colour sample points within Figure 4B. Next, a second group of hexagonal grid colour sample points 60 is added after incrementing in the Z axis normal to the page and slightly shifted from colour sample points 58. Finally, a third group of colour sample points 62 are added after shifting incrementally in the Z axis again. Thus, by laying out each group of colour sample points in a hexagonal grid and shifting the hexagonal grid in the manner disclosed for each displacement in the Z axis the colour palette is created in a hexagonal crystalline structure. The resultant three-dimensional figure created by the distribution of a plurality of colour sample points in a hexagonal crystalline structure is a twelve-sided figure known as dodecahedron.

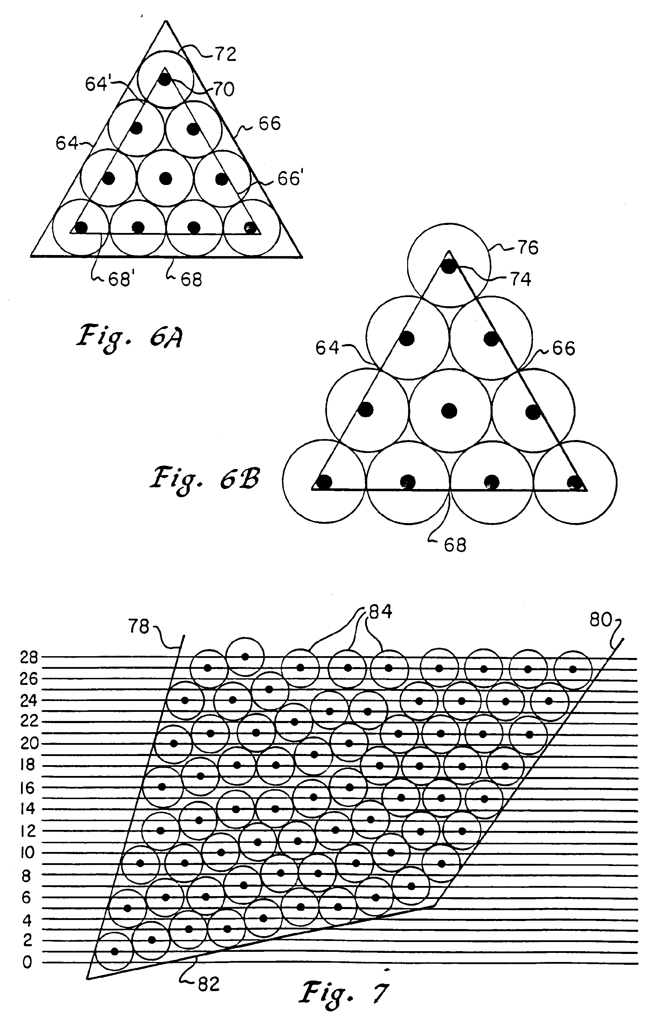

Referring now to Figures 6A and 6B there are depicted two methods of boundary treatment within a colour palette in accordance with the method of the present invention. As may be seen, each colour sample point within Figures 6A and 6B is depicted as a sample point having a circular "shell" around it which represents the characterisation of that sample point as viewed by the human eye. In the three-dimensional example disclosed in Figures 6A and 6B the colour palettes each include boundaries denoted at reference numerals 64, 66 and 68. In one method of boundary treatment in accordance with the present invention the boundaries of the colour palette are treated like the shell of another colour. All space within the colour palette is then uniformly filled in the sense that no point is farther from the selected maximum allowable distance from a colour sample point.

However, because the boundaries of the colour palette are not explicitly populated by colour sample points, the brightest colours are missing. Error diffusion may be utilised to create any colour between other colours by mixing; however, because the boundaries are not between colours the ultimate colour gamut is limited to the smaller region indicated by boundaries 64′, 66′ and 68′. Despite the loss of the brightest dolours, the selection strategy depicted within Figure 6A for treatment of boundary conditions will include much less image noise due to the smaller maximum distance between any point within the full colour gamut and the nearest colour sample point within the colour palette.

Referring now to Figure 6B, there is depicted a second method of boundary treatment within a colour palette in accordance with the method of the present invention. As may be seen in Figure 6B, the same number of colour sample points are utilised, except in this case the colour sample points are distributed at or along colour palette boundaries 64, 66, and 68. By locating colour sample points along each of the boundaries of the colour palette it will be possible to reproduce the brightest colours associated with those boundaries.

However, it should be clear upon reference to Figures 6A and 6B that the larger size shell 76 associated with a colour sample point 74 in Figure 6B will mean that an image created utilising the colour palette depicted in Fiqure 6B will include much more image noise, due to the increased maximum distance between an arbitrary point within Figure 6B and the nearest colour sample point.

Indeed, the boundary treatment method depicted in Figure 6B would require almost three times as many colour sample points as the boundary treatment method disclosed in Figure 6A to achieve the same amount of image noise. The Applicants have discovered that the boundary treatment method disclosed in Figure 6B may still be utilised to populate the colour palette with the brightest possible colours in view of the fact that the hexagonal crystalline structure utilised in the colour palette of the present invention results in a substantial noise reduction over previously known cubic Cartesian distribution systems.

Finally, with reference to Figure 7, there is depicted a schematic representation of a method for distributing colour sample points within irregularly shaped colour space boundaries. While the previous discussion of colour palettes has utilised regularly shaped multi-dimensional structures to illustrate a colour palette, those skilled in the art will appreciate that the human eye is decidedly nonlinear. Certain colours are visually perceived differently than other colours and a colour palette designed for utilisation in the real world will generally not be regular. Thus, the schematic representation contained within Figure 7 includes three irregular boundaries 78, 80 and 82 which represent, in two dimensions, a portion of an irregular colour space.

This colour space may comprise the YIQ or YUV colour spaces well known in the field of colour imagery. These colour spaces are chosen so that equal distances in the colour space correspond to equal changes in colour, as perceived by the human eye.

The irregular colour space depicted within Figure 7 may still be populated with colour sample points in a hexagonal crystalline structure by applying the following approach. The colour palette is first divided into a number of planes. These planes are depicted as horizontal lines in the two-dimensional illustration of Figure 7. The plane located at the lowest level within the colour palette is first examined to find a point within the colour palette where a colour sample point may be disposed. It should be noted that the implementation depicted in Figure 7 is much like the boundary treatment disclosed within Figure 6A, in that the shells representing the visual peroeption of each colour sample point are disposed entirely within the boundary conditions of the irregularly shaped colour space.

After disposing a colour sample point at the lowest plane possible within the boundaries of the colour palette, as many colour sample points as possible are located along that plane such that the shells representing the visual perception of each colour sample point do not overlap. When no additional colour sample points may be located on that plane the plane is incremented and colour sample points are once again disposed along the next plane in a non-overlapping manner. lt should be appreciated upon reference to Figure 7 that despite the irregular nature of the colour palette depicted a plurality of colour sample points may be disposed therein in substantially a hexagonal pattern in a method which simulates crystal growth. Despite the irregularities forced upon the location of certain colour sample points by the irregular boundaries of the colour space, the vast majority of colour sample points within the colour space will, if packed as tightly as possible, find themselves aligned in the hexagonal crystalline structure previously described.

Despite the fact that the shell of each colour sample point is depicted throughout the foregoing specification as a perfectly spherical shell, those skilled in the visual colour arts will appreciate that the visual perception of colours will vary substantially based upon the content of each colour sample point. The NTSC standards for visual perception are expressed in terms of Y, I, and Q where Y is the luminance channel, I is the warm-cool axis, and Q is the green-magenta axis. The luminance channel is the channel to which the eye is most sensitive and the green-magenta axis represents the colours to which the eye is least sensitive. Thus, the location of a colour sample point within the colour palette may result in a non-uniform shape for the shell of each colour sample point based upon human visual perception.

If, as explained above, the colour sample points in the colour palette are laid in a hexagonal crystalline structure in a colour space which has been warped so that equal distances within the colour space correspond to equal changes in colour, as perceived by the human eye, then the perceived worst-case distance is minimized, as desired. This is equivalent to laying the colour sample points in a hexagonal crystalline structure in a linear colour space, wherein the shells of the colour sample points are non-uniform, based upon human visual perception. The concept disclosed herein is equally applicable whether one considers the colour sample point shells to be uniform and the colour space warped or the colour sample point shells to be warped and the colour space uniform.

Upon reference to the foregoing specification, those skilled in the art will appreciate that the placement of sample points within a multi-dimensional space will have application in areas other than image generation. For examples three-dimensional models of thermal conditions or stress conditions may also utilise this technique wherein the worst-case distance between an arbitrary point in a three-dimensional space and the nearest sample point may be minimized utilising a specified number of sample points.

There has been described a data processing system and a method of operation of the data processing system wherein a a display device is used for displaying rows and columns of picture elements, each picture element having a selected colour associated therewith. A predetermined number of colour sample points are distributed throughout a colour palette in a hexagonal crystalline structure wherein the worst-case distance between any point within the colour space and a colour sample point in the palette is minimized. A processor is then utilised to select a colour point from within the colour palette for each picture element within the display. In a preferred embodiment of the present invention a selected number of colour sample points are located at the vertices of the colour paiette in order to provide more brilliant colours.

While the invention has been particularly shown and described with reference to a preferred embodiment, it will be understood by those skilled in the art that various changes may be made therein without departing from scope of the invention as defined by the claims.

## Claims

1. A data processing system for generating for display a plurality of picture elements which form a digital representation of an input image, the system comprising: a colour palette (16) in which are stored a fixed number of colour sample points distributed in a multidimensional colour space; and means to select a colour sample point (46, 48, 50, 52, 58, 60, 62, 70, 74) from the colours in said colour palette for each picture element, characterised in that the colour sample points are disposed in the colour space in a hexagonal crystalline arrangement.

2. A data processing system as claimed in Claim 1 wherein the multi-dimensional space has multiple axes and boundaries defining a volume, the data processing system comprising means for distributing the sample points within the volume for a predetermined worst-case distance between any arbitrary point within the multi-dimensional space and the closest sample point, the means for distributing comprising:
means for selected an axis in the multi-dimensional space;
means for defining a surface which is normal to the selected axis;
means for calculating coordinate data for sample points on the surface subject to the constraints that each sample point lies within the boundaries and that no two sample points lie closer together than a minimum distance, the minimum distance being functionally dependant on the predetermined worst-case distance;
means for determining when no further points satisfying the constraints may be found on the surface;
means for altering the position of the defined surface incrementally.

3. A data processing system as claimed in Claim 2 wherein the means for distributing further comprises means for constraining a predetermined number of the sampling points to be located at the boundaries of the volume.

4. A data processing system as claimed in any preceding claim wherein the data processing system is a display adapter for a display system, the display system comprising a display device for displaying rows and columns of picture elements each having a selected colour associated therewith.

5. A data processing system as claimed in any preceding claim wherein the multi-dimensional colour space is a three-dimensional colour space.

6. A data processing system as claimed in Claim 5 wherein a primary colour is associated with each major axis of the three dimensional space.

7. A data processing system as claimed in any preceding claim comprising:
a display device for displaying rows and columns of picture elements each having a selected colour associated therewith;
a display driver for coupling selected colour points to the display device.

8. A data processing system as claimed in Claim 7 wherein the display device comprises a colour monitor.

9. A method for operating a data processing system comprising the step of generating and storing in a colour palette, a representation of a multi-dimensional colour space, the representation comprising a plurality of colour sample points disposed within the multi-dimensional colour space characterised in that the sample points are disposed in the colour space in a hexagonal crystalline arrangement.

10. A method as claimed in Claim 9 wherein the step of generating the representation of the multi-dimensional colour space at the plurality of sample points comprises the steps of:
selecting a number of sample points; and
distributing the selected number of sample points in a hexagonal crystalline structure throughout the multi-dimensional space.

11. A method as claimed in Claim 10 wherein the multi-dimensional colour space has multiple axes and boundaries and wherein the step of distributing the selected number of colour sample points in a hexagonal crystalline structure throughout the multi-dimensional colour space comprises the steps of:
determining a minimum distance between any sample point within the multi-dimensional space and the closest sample point;
selected an axis;
defining a surface normal to the selected axis;
distributing sample points on the defined surface subject to the constraints that each sample point lies on or within the boundaries and that no two sample points lie closer together than the minimum distance; and
altering the position of the defined surface incrementally and repeating the distributing step until the selected number of sample points are distributed throughout the multi-dimensional space.

12. A method as claimed in Claim 11 wherein the step of distributing the predetermined number of sample points in a hexagonal crystalline structure throughout the multi-dimensional space comprises the step of distributing a selected number of sample points at the boundaries of the multi-dimensional space.

## Patentansprüche

1. Ein Datenverarbeitungssystem zur Erzeugung und Anzeige einer Vielzahl von Bildelementen, die eine digitale Darstellung eines eingegebenen Bildes bilden, wobei das System besteht aus: einer Farbpalette 16, in der eine festgelegte Anzahl von in einem mehrdimensionalen Farbraum verteilten Farbpunkten gespeichert sind; und einem Mittel zur Auswahl eines Farbmusterpunkts 46, 48, 50, 52, 58, 60, 62, 70, 74 für jedes Bildelement aus den Farben der Farbpalette, und wobei die Farbpalette dadurch gekennzeichnet ist, daß die Farbmusterpunkte in einer sechseckigen kristallinen Anordnung im Farbraum verteilt sind.

2. Ein Datenverarbeitungssystem gemäß Anspruch 1, in dem der mehrdimensionale Raum mehrere Achsen sowie Begrenzungen, die ein Volumen definieren, besitzt, und das über Mittel verfügt, die Musterpunkte für einen vorgegebenen Maximalabstand zwischen einem beliebigen Punkt im mehrdimensionalen Raum und dem nächstgelegenen Musterpunkt im Volumen zu verteilen, wobei dieses Mittel besteht aus:
einem Mittel zur Auswahl einer Achse im mehrdimensionalen Raum;
einem Mittel zur Definition einer senkrecht zur ausgewählten Achse stehenden Fläche;
einem Mittel zur Berechnung der Koordinatendaten für die Musterpunkte auf dieser Fläche unter Einhaltung der Einschränkungen, daß jeder Musterpunkt innerhalb der Grenzen liegen muß und daß der Mindestabstand zwischen zwei Musterpunkten in keinem Fall unterschritten werden darf, wobei der Mindestabstand funktional vom vorgegebenen Maximalabstand abhängig ist;
einem Mittel, mit dem festgestellt wird, wann keine weiteren Punkte auf der Fläche zu finden sind, welche die Bedingungen erfüllen;
einem Mittel zur inkrementellen Änderung der Position der definierten Fläche.

3. Ein Datenverarbeitungssystem gemäß Anspruch 2, in dem die Mittel zur Verteilung ferner Mittel enthalten, die erzwingen, daß eine vorgegebene Anzahl von Musterpunkten auf den Grenzen des Volumens liegen.

4. Ein Datenverarbeitungssystem gemäß den obigen Ansprüchen, wobei das Datenverarbeitungssystem ein Bildschirmadapter für ein Anzeigesystem ist, welches eine Anzeigeeinheit zur Anzeige von Reihen und Spalten von Bildelementen besitzt, wobei jedem Bildelement eine ausgewählte Farbe zugeordnet ist.

5. Ein Datenverarbeitungssystem gemäß den obigen Ansprüchen, in dem der mehrdimensionale Farbraum dreidimensional ist.

6. Ein Datenverarbeitungssystem gemäß Anspruch 5, in dem jeder Hauptachse des dreidimensionalen Raums eine Primärfarbe zugeordnet ist.

7. Ein Datenverarbeitungssystem gemäß den obigen Ansprüchen bestehend aus:
einer Anzeigeeinheit zur Anzeige von Zeilen und Spalten von Bildelementen, wobei jedem Bildelement eine ausgewählte Farbe zugeordnet ist;
einem Bildschirmtreiber zur Kopplung ausgewählter Farbpunkte an die Anzeigeeinheit.

8. Ein Datenverarbeitungssystem gemäß Anspruch 7, in dem die Anzeigeeinheit aus einem Farbmonitor besteht.

9. Ein Verfahren zum Betrieb eines Datenverarbeitungssystems, bestehend aus dem Schritt der Erzeugung und Speicherung einer Darstellung eines mehrdimensionalen Farbraums in einer Farbpalette, wobei die Darstellung aus einer Vielzahl im mehrdimensionalen Farbraum verteilter Farbmusterpunkte besteht und dadurch gekennzeichnet ist, daß die Musterpunkte im Farbraum in einer sechseckigen kristallinen Anordnung verteilt sind.

10. Ein Verfahren gemäß Anspruch 9, bei dem der Schritt der Erzeugung der Darstellung des mehrdimensionalen Farbraums durch die Vielzahl von Farbmusterpunkten aus folgenden Teilschritten besteht:
Auswählen einer Anzahl von Musterpunkten; und
Verteilen der ausgewählten Anzahl von Musterpunkten im mehrdimensionalen Raum in einer sechseckigen kristallinen Struktur.

11. Ein Verfahren gemäß Anspruch 10, bei dem der mehrdimensionale Farbraum mehrere Achsen und Grenzen besitzt und der Schritt der Verteilung der ausgewählten Anzahl von Farbmusterpunkten im mehrdimensionalen Farbraum in einer sechseckigen kristallinen Struktur aus folgenden Teilschritten besteht:
Festlegen eines Mindestabstandes zwischen einem beliebigen Musterpunkt innerhalb des mehrdimensionalen Raums und dem nächstgelegenen Farbmusterpunkt;
Auswählen einer Achse;
Definieren einer senkrecht zur ausgewählten Achse stehenden Fläche;
Verteilen der Musterpunkte auf der definierten Fläche unter Berücksichtigung der Einschränkungen, daß jeder Musterpunkt auf den Grenzen oder innerhalb der Grenzen liegen muß und daß der Mindestabstand in keinem Fall unterschritten wird;
sowie inkrementelle Veränderung der Position der definierten Ebene und Wiederholung des Verteilungsschrittes, bis die ausgewählte Anzahl von Farbmusterpunkten über den gesamten mehrdimensionalen Raum verteilt ist.

12. Ein Verfahren gemäß Anspruch 11, bei dem der Schritt der Verteilung der vorher festgelegten Anzahl von Musterpunkten im mehrdimensionalen Raum in einer sechseckigen kristallinen Struktur den Schritt der Verteilung einer ausgewählten Anzahl von Musterpunkten an den Grenzen des mehrdimensionalen Raums beinhaltet.

## Revendications

1. Système de traitement de données pour générer et afficher une pluralité d'éléments images qui forment une représentation numérique d'une image d'entrée, le système comprenant: une palette de couleurs (16) dans laquelle est emmagasiné un nombre fixé de points d'échantillons de couleurs distribués dans un espace de couleurs multidimensionnel; et des moyens pour sélectionner un point d'échantillon de couleurs (46, 48, 50, 52, 58, 60, 62, 70, 74) parmi les couleurs de ladite palette de couleurs pour chaque élément image; caractérisé en ce que les points d'échantillons de couleurs sont disposés dans l'espace de couleurs selon un arrangement cristallin hexagonal.

2. Système de traitement de données tel que revendiqué dans la revendication 1 dans laquelle l'espace multidimensionnel a de multiples axes et des frontières définissant un volume, le système de traitement de données comprenant des moyens pour distribuer les points d'échantillons à l'intérieur d'un volume pour une distance prédéterminée la plus défavorable entre un point arbitraire à l'intérieur de l'espace multidimensionnel et le point d'échantillon le plus près, les moyens pour distribuer comprenant:
des moyens pour sélectionner un axe dans l'espace multidimensionnel,
des moyens pour définir une surface normale à l'axe sélectionné,
des moyens pour calculer les coordonnées pour des points d'échantillons sur une surface sujette à des contraintes telles que chaque point d'échantillon se trouve à l'intérieur des frontières et que deux points d'échantillons ne sont pas plus près l'un de l'autre qu'une distance minimale, la distance minimale dépendant fonctionnellement d'une distance prédéterminée la plus défavorable,
des moyens pour déterminer quand aucun point supplémentaire répondant aux contraintes ne peut être trouvé sur la surface;
des moyens pour modifier par incréments la position de la surface définie.

3. Système de traitement de données tel que revendiqué dans la revendication 2 dans laquelle les moyens pour distribuer comprennent en outre des moyens pour contraindre un nombre prédéterminé de points d'échantillons à être localisés aux frontières du volume.

4. Système de traitement de données tel que revendiqué dans une quelconque des revendications précédentes dans lequel le système de traitement de données est un adaptateur d'affichage pour un système d'affichage, le système d'affichage comprenant un dispositif d'affichage pour afficher les rangées et les colonnes d'éléments images, chacun ayant une couleur sélectionnée avec laquelle il est associé.

5. Système de traitement de données tel que revendiqué dans une quelconque des revendications précédentes dans lequel l'espace de couleurs multidimensionnel est un espace de couleurs à trois dimensions.

6. Système de traitement de données tel que revendiqué dans la revendication 5 dans lequel une couleur primaire est associée avec chaque axe majeur de l'espace à trois dimensions.

7. Système de traitement de données tel que revendiqué dans une quelconque des revendications précédentes comprenant:
un dispositif d'affichage pour afficher les rangées et les colonnes des éléments d'image, chacun ayant une couleur sélectionnée qui lui est associée;
une commande d'affichage pour coupler les points de couleur sélectionnés au dispositif d'affichage.

8. Système de traitement de données tel que revendiqué dans la revendication 7 dans lequel le dispositif d'affichage comprend un moniteur couleur.

9. Méthode pour faire fonctionner un système de traitement de données comprenant une étape pour générer et emmagasiner dans une palette de couleurs, une représentation de l'espace de couleurs multidimensionnel, la représentation comprenant une pluralité de points d'échantillons de couleurs disposés dans un espace de couleurs selon un arrangement cristallin hexagonal.

10. Méthode telle que revendiquée dans la revendication 9 dans laquelle l'étape pour générer la représentation de l'espace de couleurs multidimensionnel à la pluralité des points d'échantillons comprend les étapes de:
sélectionner un nombre de points d'échantillons et distribuer le nombre sélectionné de points d'échantillons dans la structure cristalline hexagonale à travers l'espace multidimensionnel.

11. Méthode telle que revendiquée dans la revendication 10 dans laquelle l'espace de couleurs multidimensionnel a de multiples axes et frontières et dans laquelle l'étape de distribuer un nombre sélectionné de points d'échantillons de couleurs dans la structure cristalline hexagonale à travers l'espace de couleurs multidimensionnel comprend les étapes de:
déterminer une distance minimum entre n'importe quel point d'échantillon à l'intérieur de l'espace multidimensionnel et le point d'échantillon le plus proche;
sélectionner un axe;
définir une surface normale aux axes sélectionnés:
distribuer des points d'échantillons sur la surface définie sujette aux contraintes telles que chaque point d'échantillon se trouve sur ou à l'intérieur des frontières et que deux points d'échantillons ne soient pas plus près l'un de l'autre que la distance minimum; et
modifier par incréments la position de la surface définie et répéter l'étape de distribution jusqu'à ce qu'un nombre sélectionné de points d'échantillons soient distribués à travers l'espace multidimensionnel.

12. Méthode telle que revendiquée dans la revendication 11 dans laquelle l'étape de distribuer le nombre prédéterminé de points d'échantillons dans une structure cristalline hexagonale à travers l'espace multidimensionnel comprend les étapes de distribuer un nombre sélectionné de points d'échantillons aux frontières de l'espace multidimensionnel.
